Europäisches Patentamt

European Patent Office

Office européen des brevets

(19)

(11) Veröffentlichungsnummer: **0 254 802**
**B1**

# EUROPÄISCHE PATENTSCHRIFT

(45) Veröffentlichungstag der Patentschrift:
24.01.90

(21) Anmeldenummer: 87104593.6

(22) Anmeldetag: 31.05.85

(60) Veröffentlichungsnummer der früheren Anmeldung
nach Art. 76 EPÜ: 0182828

(51) Int. Cl.⁴: **B61G 9/08**, F16F 9/08,
B60G 11/26, B62D 55/112

(54) **Hydropneumatische Federungsvorrichtung.**

(30) Priorität: 01.06.84 DE 3420557

(43) Veröffentlichungstag der Anmeldung:
03.02.88 Patentblatt 88/5

(45) Bekanntmachung des Hinweises auf die Patenterteilung:
24.01.90 Patentblatt 90/4

(84) Benannte Vertragsstaaten:
AT FR GB IT SE

(56) Entgegenhaltungen:
DE-A- 3 241 461
DE-C- 468 320
DE-C- 811 893
FR-A- 2 149 251
FR-A- 2 333 168
FR-A- 2 349 066
GB-A- 888 908
US-A- 3 002 741
US-A- 3 977 648

(73) Patentinhaber: Ficht GmbH, Spannleitenberg 1,
D-8011 Kirchseeon(DE)

(72) Erfinder: Ficht, Reinhold, Spannleitenberg,
D-8011 Kirchseeon(DE)
Erfinder: Vilsmeier, Walter, Spechtweg 6,
D-8011 Vaterstetten(DE)

(74) Vertreter: Patentanwälte Dr. Solf & Zapf,
Zeppelinstrasse 53, D-8000 München 80(DE)

**Beschreibung**

Die Erfindung betrifft eine hydropneumatische Federungs-bzw. Stoßdämpfervorrichtung der im Oberbegriff des Patentanspruchs 1 angegebenen Art (siehe US-A 3 002 741).

Bei einer aus der DE-B 2 227 139 weiter bekannten Stoßdämpfervorrichtung, die im übrigen nur für Notfälle als stoßdämpfender Puffer für Aufzüge benutzbar ist, hat der Federbalg eine zylindrische Form. Sein anderes Ende wird über das Widerlager und einen darauf befestigten Zylinder beaufschlagt, in dem die Gasfeder untergebracht ist. Die Gasfeder ist eine Metallblase, die über ein Ventil von außen druckvorspannbar ist. Zwischen der im Zylinder angeordneten Kammer für die Gasfeder und dem Federbalg ist ein Drosselventil eingesetzt. Nachteilig dabei ist, daß die Stoßdämpfervorrichtung zum Unterbringen erheblichen Platz beansprucht, da der die Gasfeder aufnehmende Zylinder praktisch eine Verlängerung des zylindrischen Federbalges darstellt. Da ferner die Außenkanten des Federbalges bei dessen Verformung im Gehäuse anliegend schleifen und da der Federbalg eine äußere Drahtarmierung aufweist, tritt bei der Deformation des Federbalges ein starker Verschleiß ein, der eine andauernde Benutzung dieser Stoßdämpfervorrichtung ausschließt. Aus der DE-A 1 655 029 ist eine hydropneumatische Stoßdämpfvorrichtung zum Abfedern von Fahrzeugteilen gegenüber dem Fahrzeugrahmen bekannt, bei der ein Hydraulikzylinder mit einem mehrere über eine Membrane und Drosselstellen voneinander getrennte Gasdruckspeicher baulich vereinigt ist. Diese Stoßdämpfvorrichtung ist baulich sehr aufwendig und benötigt zudem unzweckmäßig viel Einbauraum zur Unterbringung. Sie weist zudem ein Dämpfungsverhalten auf, wie es für schwere Kraftfahrzeuge nur bedingt brauchbar ist.

Bei allen bekannten hydropneumatischen Federungsvorrichtungen beulen die Federbälge bei hohen Belastungen aus, so daß die Belastbarkeit insoweit begrenzt ist.

Der Erfindung liegt die Aufgabe zugrunde, eine hydropneumatische Federungsvorrichtung der eingangs genannten Art zu schaffen, die bei kompaktem Aufbau verschleißarm und hochbelastbar ist.

Die gestellte Aufgabe wird erfindungsgemäß durch die im kennzeichnenden Teil des Patentanspruchs 1 angegebenen Merkmale gelöst.

Bei der gewählten Form des Federbalges hat dieser in der gestreckten Ausbildung eine ausreichende Arbeitslänge. Der Federbalg läßt sich sehr kräftig auslegen, um auch hohen Belastungen gewachsen zu sein. Trotz der hohen Belastbarkeit erhält das Gehäuse kompakte Abmessungen, so daß die Federungsvorrichtung vorteilhafterweise bei beschränktem Einbauraum einsetzbar ist. Es lassen sich gezielt verschleißhemmende Vorkehrungen treffen, so daß die Federungsvorrichtung auch bei hohen Belastungen über lange Standzeiten dauernd arbeiten kann. Von besonderem Vorteil sind die kompakten Abmessungen der Federungsvorrichtung für Puffer von Eisenbahnwagen.

Eine verschleißarm arbeitende, kompakte Federungsvorrichtung wird durch das zweite kennzeichnende Merkmal des Anspruchs 1 geschaffen, da bei dieser Ausbildung dynamische Abdichtungen entfallen, da der Federbalg mit seinen Abstütz- bzw. Beaufschlagungselementen baulich vereinigt ist und eine dichte und außerordentlich hochbelastbare Baueinheit bildet.

Die die Belastbarkeit der Federungsvorrichtung trotz kompakter Außenabmessungen steigernde, erfindungsgemäße Maßnahme wird durch die Sicken gewährleistet. Die Sicken verbessern auch die Gestaltfestigkeit der Einzelsegmente und führen zu einem niedrigen mechanischen Verformungswiderstand des ungefüllten Federbalges, was den Vorteil hat, daß die Kennlinie der Federungsvorrichtung durch den rein mechanischen Verformungswiderstand des Federbalges nur in einem exakt vorherbestimmbaren Maß beeinflußt wird.

Die formschlüssige Abstützung der Einzelsegmente bei der Verformung des Federbalges erhöht die Belastbarkeit der Federungsvorrichtung. Die Einzelsegmente sind gegen ein Ausbeulen sehr stabil, wobei sich dieser wünschenswerte Effekt mit zunehmender Verformung und steigendem Innendruck im Federbalg verstärkt.

Damit hohe Belastungen dauerhaft aufgenommen werden können, ist eine Ausführungsform zweckmäßig, wie sie aus Anspruch 2 hervorgeht. Die Einzelsegmente ergeben die gewünschte Verformbarkeit des Federbalges, während sie zu einer hohen Gestaltfestigkeit beitragen.

Vorteilhaft ist ferner eine Ausführungsform gemäß Anspruch 3, da diese Gestalt der Einzelsegmente zu einer wirkungsvollen Bewegungsübertragung zwischen den Einzelsegmenten im Federbalg führt und zudem zur Erhöhung der Verschleißfestigkeit des Federbalges in der Federungsvorrichtung beiträgt.

Vorteilhaft ist ferner die Ausführungsform von Anspruch 4, da sich hier eine sehr belastbare Verbindung zwischen den Einzelsegmenten einerseits bewerkstelligen läßt und diese andererseits miteinander in strömungs- bzw. drucküberträgender Verbindung stehen. Die Lage des Durchganges in jedem Einzelsegment hat den Vorteil, daß die Beweglichkeit des Federbalges nahe seinem Außenumfang besonders gut ist.

Ein weiterer, zweckmäßiger Gedanke ist in Anspruch 6 enthalten. Auf diese Weise wird der Federbalg wiederum ohne dynamische Dichtelemente einfach mit der Kammer strömungsverbunden, in der die Gasfeder sitzt. Dies kommt der Verschleißarmut der Federungsvorrichtung zugute.

Eine weitere, zweckmäßige Ausführungsform geht aus Anspruch 7 hervor. An dieser Gleitbahn stützen sich die Einzelelemente und damit der Federbalg bei den Arbeitsbewegungen der Federungsvorrichtung ab, so daß die Verbindungsbereiche zwischen den Einzelsegmenten gegen lokale Überbeanspruchung geschützt sind.

Die letztgenannte Abstützung des Federbalges beim Arbeiten der Federungsvorrichtung ist unabhängig vom Verformungsgrad der Gasfeder besonders wirksam, wenn die Ausführungsform von Anspruch vorliegt. Das Unterbringen der Gleitbahn läßt sich hierbei herstellungstechnisch besonders einfach bewerkstelligen.

Die Verschleißarmut bzw. die mögliche lange Standzeit der Federungsvorrichtung wird ferner durch die Maßnahmen von Anspruch 9 gesteigert, weil der Abstützdruck zwischen dem Federbalg und der Gleitbahn hierbei auf große Flächenbereiche aufgeteilt wird, die zudem verschleißhemmend oder gleitfreudig ausgebildet sein können.

Hinsichtlich des kompakten Aufbaus der Federungsvorrichtung sind auch die Maßnahmen von Anspruch 10 zweckmäßig, wobei die Befestigungsart und die Ausbildung der Gasfeder zusätzlich den Vorteil hat, daß keine dynamischen Abdichtelemente erforderlich sind.

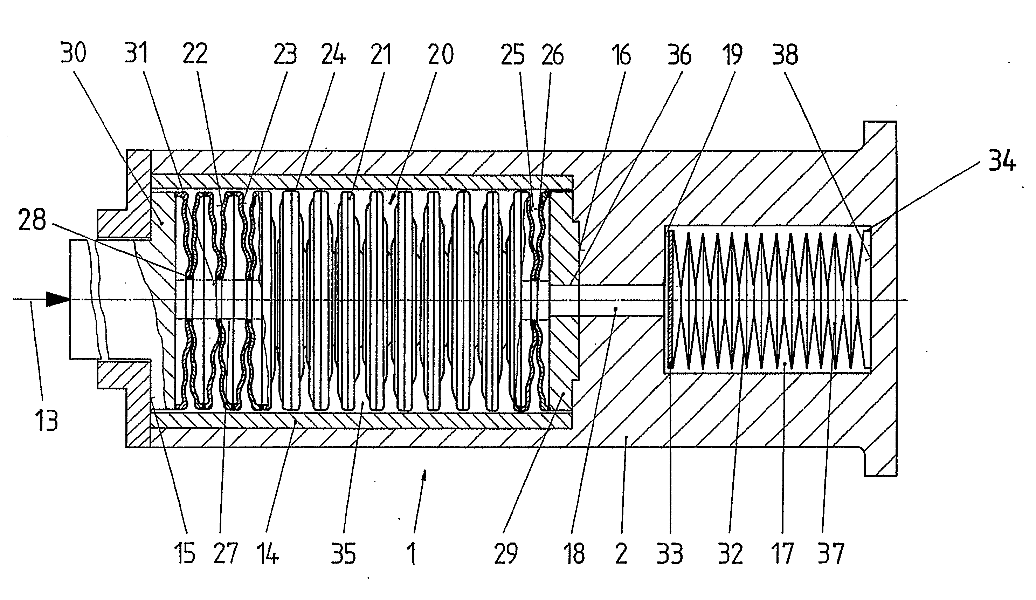

Anhand der Zeichnungen wird eine Ausführungsform des Erfindungsgegenstandes. Die Figur zeigt einen Querschnitt durch eine Federungsvorrichtung in ausgefederter Position.

Eine hydropneumatische Federungsvorrichtung 1, die beispielsweise für Puffer von Eisenbahnwagen, ferner als Aufzugs-Dämpfungsvorrichtung, als Dämpfungsvorrichtung bei Schmiedehämmern und bei Walzwerkseinrichtungen geeignet ist, weist ein allseits geschlossenes, gegebenenfalls durch einen Deckel innen zugängliches Gehäuse 2 auf, das eine Gehäuseaußenfläche 3 besitzt.

Im Gehäuse 2 ist eine Ausnehmung 35 vorgesehen, deren Außenwand eine Gleitbahn 14, beispielsweise in Form einer im Querschnitt U-förmigen Beschichtung oder eines eingelegten Streifens, trägt. Die Ausnehmung 35 wird durch eine ebene Anschlagfläche 15 einerseits und eine Anschlagfläche 16 andererseits begrenzt. Es ist ferner eine annähernd zylindrische Kammer 17 vorgesehen, die über einen Kanal 18 mit der Ausnehmung 35 in druckmittelübertragender Verbindung steht. Die Kammer 17 wird an einem Ende durch einen ebenen Boden 38 und am anderen Ende durch eine ebene Anschlagfläche 19 begrenzt, in die der Kanal 18 mündet.

In der Ausnehmung 35 ist ein Federbalg 20 angeordnet. Der Federbalg 20 besteht aus hohlen Einzelsegmenten 21 annähernd ringscheibenförmiger Gestalt. Die Einzelsegmente 21 bestehen aus Metallblech und sind an ihren Ober- und Unterseiten 22 und 23 mit einen Durchgang 27 konzentrisch umgebenden Sicken 25, 26 versehen. Die Sicken aneinander anliegender Ober- und Unterseiten 22, 23 benachbarter Einzelsegmente 21 passen formschlüssig ineinander. Die Einzelsegmente 21 sind angrenzend an die Durchgänge 27 in Bereichen 28 miteinander verschweißt. Jedes Einzelsegment 21 besitzt einen verbreiterten Randbereich 24, der zur Anlage an der Gleitbahn 14 bestimmt ist, wenn der Federbalg verformt wird. Das erste Einzelsegment 21 des Federbalges 20 ist nur als Hälfte ausgebildet und mit einem Boden 29 abgedichtet verschweißt und der auf der Fläche 16 anliegt und gegebenenfalls dort befestigt ist. Das letzte Einzelsegment 21 ist ebenfalls nur als Hälfte ausgebildet und mit einem Deckel 30 verschweißt.

Die Durchgänge 27 der Einzelsegmente 21 bilden eine Leitung 31, die über eine Öffnung 36 im Boden 29 mit dem Kanal 18 verbunden ist.

In der Kammer 17 ist eine Gasfeder 32 in Form eines zylindrischen Faltenbalges untergebracht, der mit seinem Ende 34 am Boden 38 abgedichtet verschweißt ist und an seinem anderen Ende durch eine starre Platte 33 abgedichtet verschlossen ist. Der mit 37 bezeichnete Innenraum der Gasfeder 32 ist mit einem Gas unter einem bestimmten Druck gefüllt, derart, daß die Platte 33 an den Flächen 19 anliegt, wenn die Federungsvorrichtung 1 unbelastet und in der ausgefederten Position gemäß der Figur steht. Der Federbalg 20, der Kanal 18 und die Kammer 17 sind hingegen mit einem Hydraulikmedium gefüllt. Für die Füllung der Federungsvorrichtung (Hydraulik- und Gasfüllung) sind entweder nicht dargestellte Ventileinrichtungen vorgesehen, oder werden die entsprechenden Komponenten beim Zusammenbau der Federungsvorrichtung gefüllt und dann hermetisch verschlossen. Als Hydraulikmedium kann z.B. Öl oder eine Dämpfpaste verwendet werden.

Das Funktionsprinzip der Federungsvorrichtung beruht im wesentlichen darauf, daß, wenn eine stoßartige Belastung zu wirken beginnt, der Federbalg 20 zusammengedrückt wird. Das dabei verdrängt Hydraulikmedium fließt über den Kanal 18 in die Kammer 17, wobei sich die Länge der Gasfeder 32 verkürzt. Als Folge davon entsteht im Hydraulikmedium und in dem Gasvolumen der Gasfeder nach dem Gesetz der polytropen Zustandsänderungen idealer Gase ein bestimmter Systemdruck. Dieser Systemdruck wirkt zwischen dem Boden 29 und dem Deckel 30 als Federkraft der Belastung entgegen. Bei der Verformung des Federbalges 20 legen sich die Sicken 25, 26 ineinander, da die Einzelsegmente zusammengedrückt werden. Bei steigendem Innendruck im Federbalg 20 werden die Einzelsegmente 21 jedoch durch die ineinandergreifenden Sicken aneinander und gegen ein Ausbeulen abgestützt. Sobald die Belastung nachläßt oder abgebaut wird, kann sich die Gasfeder 32 wieder entspannen, wie auch der Federbalg 20. Bei der Verformungsbewegung des Federbalges 20 können sich die Flächenbereiche 24 an der Gleitfläche 14 abstützen.

## Patentansprüche

1. Hydropneumatische Federungsvorrichtung, insbesondere für Puffer für Eisenbahnwagen oder dgl., mit einem zwischen relativ zueinander beweglichen Teilen einsetzbaren Federelement, das ein Gehäuse für einen mit einem Hydraulikmedium gefüllten Federbalg aufweist, der mit einer mit dem Hydraulikmedium gefüllten Kammer in Strömungsverbindung steht, in der eine unter dem hydraulischen Druck verformbare Gasfeder angeordnet ist, wobei der Federbalg mit einem Ende im Gehäuse abgestützt ist und am anderen Ende durch ein mit einem der relativ zueinander beweglichen Teile verbundenes Widerlager beaufschlagbar ist, wobei der Federbalg (20) ein aus flach aufeinandergelegten, vorzugsweise verschweißten Einzelsegmenten (21) bestehender Metallbalg ist, wobei jedes Einzelsegment (21) eine hohle Kreisringscheibe ist, einen im Mittenbereich der Kreisscheibe angeordneten Durchgang (27) besitzt, in dessen angrenzenden Bereichen (28) es mit dem benachbarten Einzelelement (21) verbunden ist, dadurch gekennzeichnet, daß die Ober- und Unterseite (22, 23) jedes Einzelsegments (21) mit zum Durchgang (27) konzentrisch umlaufenden Sicken (25, 26) versehen ist und daß die Sicken (25, 26) in benachbarten Ober- und Unterseiten (22, 23) benachbarter Einzelsegmente (21) - bei der Verformung des Federbalges (20) - formschlüssig und abstützend ineinandergreifen.

2. Hydropneumatische Federungsvorrichtung nach Anspruch 1, dadurch gekennzeichnet, daß der Federbalg (20) am Abstützende mit einem im Gehäuse (2) festgelegten Boden (29) und am anderen Ende mit einem im Gehäuse (2) bewegbaren, das Widerlager (30) bildenden Deckel jeweils dicht verschweißt ist.

3. Hydropneumatische Federungsvorrichtung nach wenigstens einem der Ansprüche 1 bis 2, dadurch gekennzeichnet, daß der Federbalg (20) ein aus flach aufeinander gelegten, vorzugsweise verschweißten, Einzelsegmenten (21) bestehender Metallbalg ist.

4. Hydropneumatische Federungsvorrichtung nach wenigstens einem der Ansprüche 1 bis 3, dadurch gekennzeichnet, daß jedes Einzelsegment (21) eine hohle Kreisringscheibe ist.

5. Hydropneumatische Federungsvorrichtung nach wenigstens einem der Ansprüche 1 bis 4, dadurch gekennzeichnet, daß jedes Einzelsegment (21) einen Durchgang (27) besitzt, in dessen angrenzenden Bereichen (28) es mit dem benachbarten Einzelelement (21) verbunden ist.

6. Hydropneumatische Federungsvorrichtung nach wenigstens einem der Ansprüche 1 bis 5, dadurch gekennzeichnet, daß die Durchgänge (27) der Einzelsegmente (21) eine Leitung (31) bilden oder aufnehmen, die über eine Öffnung (36) im Boden (29) und einen Verbindungskanal (18) mit der Kammer (17) verbunden ist.

7. Hydropneumatische Federungsvorrichtung nach wenigstens einem der Ansprüche 1 bis 6, dadurch gekennzeichnet, daß im Gehäuse (2) eine Gleitbahn (14) für die Einzelsegmente (21) des Federbalges (20) angeordnet ist.

8. Hydropneumatische Federungsvorrichtung nach wenigstens einem der Ansprüche 1 bis 7, dadurch gekennzeichnet, daß sich die Gleitbahn (14) - bei unverformtem Federbalg (20) - vom Boden (29) bis über den Deckel (30) erstreckt.

9. Hydropneumatische Federungsvorrichtung nach wenigstens einem der Ansprüche 1 bis 8, dadurch gekennzeichnet, daß jedes Einzelsegment (21) zur Anlage an der Gleitbahn (14) mit einem flachen Randbereich (24) ausgestattet ist, der gegebenenfalls gleitfreudig und/oder verschleißfest ausgebildet ist.

10. Hydropneumatische Federungsvorrichtung nach wenigstens einem der Ansprüche 1 bis 9, dadurch gekennzeichnet, daß die Gasfeder (32) ein, vorzugsweise zylindrischer, gestreckter Membran-Faltenbalg ist, der mit seinem einen Ende am Boden (38) der Kammer (17) abgedichtet befestigt und an seinem anderen, dem Kanal (18) zugewandten Ende durch eine starre Platte (33) abgedichtet ist.

**Revendications**

1. Dispositif de suspension hydropneumatique, en particulier pour les tampons de wagons de chemin de fer ou analogue, comprenant un élément de suspension qui peut être monté entre des parties mobiles les unes par rapport aux autres, cet élément présentant un logement pour un soufflet élastique rempli d'un agent hydraulique pouvant circuler vers une chambre également rempli de l'agent hydraulique et dans laquelle est disposé un ressort pneumatique déformable par le pression hydraulique, une extrémité du soufflet élastique reposant dans le logement et l'autre pouvant être soumise à l'action d'un contre-appui relié à l'une des parties mobiles les unes par rapport aux autres, le soufflet élastique (20) étant un soufflet métallique consistant en des segments individuels (21) superposés à plat et reliés de préférence par soudure, chaque segment individuel (21) étant un disque creux circulaire possédant dans la région du centre du disque un passage (27) dans les régions adjacentes (28) duquel il est relié au segment individuel (21) voisin, caractérisé en ce que la face supérieure et inférieure (22, 23) de chaque segment individuel (21) présente des ondulations (25, 26) entourant concentriquement le passage (27) et en ce que les ondulations (25, 26) des faces supérieure et inférieure voisines (22, 23) des segments individuels (21) voisins s'emboîtent sans jeu et servent d'éléments de soutien lorsque le soufflet élastique (20) est déformé.

2. Dispositif de suspension hydropneumatique selon la revendication 1, caractérisé en ce que le soufflet élastique (20) est respectivement soudé de manière étanche à son extrémité d'appui à un fond (29) appliqué dans le logement (2) et à son autre extrémité, à un couvercle formant le contre-appui (30) et mobile à l'intérieur du logement (2).

3. Dispositif de suspension hydropneumatique selon au moins l'une des revendications 1 à 2, caractérisé en ce que le soufflet élastique (20) est un soufflet métallique consistant en des segments individuels (21) superposés à plat et reliés de préférence par soudure.

4. Dispositif de suspension hydropneumatique selon au moins l'une des revendications 1 à 3, caractérisé en ce que chaque segment individuel (21) est un disque creux en anneau de cercle.

5. Dispositif de suspension hydropneumatique selon au moins l'une des revendications 1 à 4, caractérisé en ce que chaque segment individuel (21) possède un passage (27) dans les régions adjacentes (28) duquel il est relié au segment individuel (21) voisin.

6. Dispositif de suspension hydropneumatique selon l'une au moins des revendications 1 à 5, caractérisé en ce que les passages (27) des segments individuels (21) forment ou accueillent un conduit (31) qui est relié à la chambre (17) par une ouverture (36) du fond (29) et un canal de liaison (18).

7. Dispositif de suspension hydropneumatique selon l'une au moins des revendications 1 à 6, caractérisé en ce que dans le logement (2) est disposée une glissière (14) pour les segments individuels (21) du soufflet élastique (20).

8. Dispositif de suspension hydropneumatique selon l'une au moins des revendications 1 à 7, caractérisé en ce que, lorsque le soufflet (20) n'est pas déformé, la glissière (14) s'étend du fond (29) jusqu'au couvercle (30).

9. Dispositif de suspension hydropneumatique selon l'une su moins des revendications 1 à 8, caractérisé en ce que, pour être appliqué sur la glissière, chaque segment individuel (21) possède une région marginale plate (24) qui est éventuellement réalisée pour glisser facilement et/ou résister à l'usure.

10. Dispositif de suspension hydropneumatique selon l'une au moins des revendications 1 à 9, caractérisé en ce que le ressort pneumatique (32) est un soufflet d'intercirculation tendu, de préférence cylindrique, à membrane dont une extrémité est fixée de manière étanche sur le fond (38) de la chambre (17) et dont l'autre extrémité, en regard du canal (18), est rendue étanche par une plaque rigide (33).

**Claims**

1. Hydropneumatic spring assembly, especially for buffers for railway wagons or the like, having a spring element, which can be inserted between parts movable relative to one another and has a housing for a spring bellows, which is filled with a hydraulic medium and is flow-connected to a chamber, which is filled with the hydraulic medium and in which there is arranged a gas spring which is deformable under the hydraulic pressure, the spring bellows being supported in the housing with one end and being capable of being pressurized at the other end by an abutment connected to one of the parts movable relative to one another, the spring bellows (20) being a metal bellows consisting of individual segments (21) laid flat on one another, preferably welded, each individual segment (21) being a hollow annular disc, and having a passage (27), which is arranged in the central region of the annular disc and in whose bordering regions (28) it is connected to the adjacent individual element (21), characterized in that the topside and underside (22, 23) of each individual segment (21) is provided with beads (25, 26) running circumferentially and concentrically with the passage (27), and – during the deformation of the spring bellows (20) – the beads (25, 26) interlock in a form-fitting and supporting fashion in the adjacent topsides and undersides (22, 23) of adjacent individual segments (21).

2. Hydropneumatic spring assembly according to Claim 1, characterized in that in each case the spring bellows (20) is sealingly welded at the supporting end to a base (29) fixed in the housing (2), and at the other end to a cover, which is movable in the housing (2) and forms the abutment (30).

3. Hydropneumatic spring assembly according to at least one of Claims 1 to 2, characterized in that the spring bellows (20) is a metal bellows consisting of individual segments (21), which are laid flat on one another, preferably welded.

4. Hydropneumatic spring assembly according to at least one of Claims 1 to 3, characterized in that each individual segment (21) is a hollow annular disc.

5. Hydropneumatic spring assembly according to one of Claims 1 to 4, characterized in that each individual segment (21) has a passage (27), in the bordering regions (28) of which it is connected to the adjacent individual element (21).

6. Hydropneumatic spring assembly according to at least one of Claims 1 to 5, characterized in that the passages (27) of the individual segments (21) form or accept a conduit (31), which is connected to the chamber (17) via an opening (36) in the base (29) and a junction channel (18).

7. Hydropneumatic spring assembly according to at least one of Claims 1 to 6, characterized in that a slideway for the individual segments (21) of the advanced spring bellows (20) is arranged in the housing (2).

8. Hydropneumatic spring assembly according to at least one of Claims 1 to 7, characterized in that – when the spring bellows (20) is not deformed – the slideway (14) extends from the base (29) to above the cover (30).

9. Hydropneumatic spring assembly according to at least one of Claims 1 to 8, characterized in that for the purpose of being applied to the slideaway (14) each individual segment (21) is equipped with a flat edge region (24), which is constructed if necessary to slide easily and/or to be resistant to wear.

10. Hydropneumatic spring assembly according to at least one of Claims 1 to 9, characterized in that the gas spring (32) is a preferably cylindrical, stretched diaphragm bellows which is sealingly attached at one end to the base (38) of the chamber (17), and is sealed at its other end averted from the channel (18) by a rigid plate (33).

EP 0 254 802 B1